# EUROPEAN PATENT SPECIFICATION

(11) **EP 1 398 934 B1**
(45) Date of publication and mention of the grant of the patent: **02.01.2008**
(21) Application number: 02388064.4
(22) Date of filing: 16.09.2002
(51) Int. Cl.: H04L 29/06, H04Q 7/32, H04L 12/28

(54) **Secure access to a subscription module**
Sicherer Zugang zu einem Teilnehmermodul
Accès sécurisé à un module d'abonné

(43) Date of publication of application: 17.03.2004
(73) Proprietor: TELEFONAKTIEBOLAGET LM ERICSSON (publ), 164 83 Stockholm (SE)
(72) Inventor: Gehrmann, Christian, 222 29 Lund (SE)
(74) Representative: Schwarze, Holm

(56) References cited:
- WO-A-00/76120
- WO-A-98/58510
- WO-A-99/59360
- DE-A- 10 012 057
- US-B1- 6 367 014
- ZHOU L ET AL: "SECURING AD HOC NETWORKS" IEEE NETWORK, IEEE INC. NEW YORK, US, vol. 13, no. 6, November 1999 (1999-11), pages 24-30, XP000875728 ISSN: 0890-8044
- "SPECIFICATION OF THE BLUETOOTH SYSTEM" BLUETOOTH,1 December 1999 (1999-12-01), XP002175286

## Description

This invention relates to a method of providing to a client communications device access to a subscription module of a server communications device. More particular, this invention relates to a method of providing to a client communications device access to a subscription module of a server communications device, the method comprising the steps of establishing a communications link between the client communications device and the server communications device; and communicating a number of messages comprising data related to the subscription module between the server communications device and the client communications device via the communications link.

In many wireless communications systems, such as GMS, UTMS, GPRS, etc., communications devices are equipped with a subscription module, such as a SIM card, a USIM card, or the like. When a subscriber requests a communication service it is determined, via said subscription module, whether the subscriber is qualified to receive communication services from that system. For this purpose, a subscriber identity is assigned to a device in a wireless communications system which uses a subscriber identity media. In order to get access to the communications services, the communications device needs to have access to security sensitive information which is unique to the subscription and which is stored in the subscription module.

Similarly, other types of authentication or security services, such as WLAN access at hotspots, desktop login or web authentication, may be based on a subscription module, possibly in combination with GSM/UMTS related services.

In the context of the Global System for Mobile Communications (GSM), subscription is based on a SIM (subscriber identity module) card, i.e. the subscription module is implemented as a SIM card attached to a mobile device. The SIM card includes a ROM (Read Only Memory), a RAM (Read Access Memory), an EEPROM (Electrically Erasable Programmable Read Only Memory), a processor unit and an interface to the communications device. The memory of the SIM provides storage of the subscriber identity which is the International Mobile Subscriber Identity (IMSI) in a GSM network. Except for emergency calls, the device can only be operated, if a valid SIM is present. The SIM supports a security function for verification of the user of the device and for authentication of the user to the GSM network. The SIM further comprises information elements for GSM network operations, e.g. related to the mobile subscriber or GSM services.

In the above described context, if a user would like to use a SIM card, i.e. a single subscription, to connect to a wireless communications network from several different personal mobile devices, he or she needs to manually remove the SIM card from one device and put it into another device. In order to avoid this inconvenient operation it is advantageous, if the wireless communication system allows more than one communications device to share the same subscriber identity without having to pay for more than one subscription.

Similarly, if the user would like to utilise a general purpose subscription module like the SIM or USIM card for authentication or security services other than GSM/UMTS, for example WLAN access, the subscription module must be manually removed from one device and inserted into the device that is the end-point for that other authentication process.

The emerging short-range wireless technologies, such as Bluetooth and wireless LAN, which enable relatively high speed short range connections, have made it possible to simplify the tedious procedure described above.

The international application WO 99/59360 discloses an arrangement for communicating SIM related data in a wireless communications system between a wireless communications device and a subscriber identity device including a subscriber identity unit with a SIM card. The wireless communications device and the subscriber identity device are separated from each other, but may communicate with each other via a local wireless communications link within a radio frequency range. SIM related data is communicated over the local wireless communications link. Hence the above prior art system allows a simplified sharing of a subscription module by several communications devices. Instead of moving the SIM card between different mobile devices, direct wireless access to the SIM card over an air interface is realised. In the above prior art, the local wireless communications link is encrypted in order to establish a secure wireless communications link that hinders third party interception of sensitive information.

The Bluetooth pairing mechanism produces a shared secret, the so-called link key, between two Bluetooth devices (see "Baseband Specification" in "Specification of the Bluetooth System, Core, Version 1.1 ", Bluetooth Special Interest Group, February 2001). The link key is derived from a PIN that is entered by the user of the devices. The link key is subsequently used to protect the Bluetooth communication. However, since the remote access to a subscription module is particularly security sensitive, there is a need for increased security, i.e. an improved protection of the subscription module against unauthorised access to the sensitive subscription information and services on the module.

Furthermore, the IEEE 802.11 standard offers secure communications services such as authentication and encryption via a wired equivalence privacy mechanism (see "IEEE Std 802.11 - 1999 Edition IEEE - Part 11: Wireless LAN Medium Access Control and physical layer specifications"). However, this mechanism is known to have security weaknesses.

Hence, the above prior art systems involve the problem that the communication between the server and client communications device may be intercepted and an established communications link may be taken over by a dishonest user who may misuse the gained access to the subscription module.

Furthermore, if the local wireless communications link is a link to a local wireless network, such as a Bluetooth piconet, the link between the client device and the server device may comprise several wireless connections involving intermediate devices, thereby causing the security of the communications link to be difficult to control, even though the individual communications links may be encrypted. Hence, there is a risk of unauthorised interception and use of sensitive data related to the subscription module.

WO 98/58510 discloses a mobile device comprising a removable SIM chip card and a wireless interface integrated in the housing of the mobile device. The interface can be infrared or conductive and enables the SIM card to communicate directly with an external device.

US 6,367,014 describes a particular structure of enhanced short messages, and a method for synchronising and ensuring the security of exchanged enhanced short messages having this structure. The security mechanism is based on synchronisation counters and digital signatures and a message is accepted or refused by the SIM module depending on the coherence of these values with the internal state of the SIM module.

The article "Securing Ad Hoc Networks" by Lidong Zhou and Zygmunt J. Haas, IEEE Network, vol. 13, no. 6, November/December 1999 describes a number of general security issues related to ad hoc networks, in particular availability, confidentiality, integrity, authentication, and nonrepudiation.

DE 100 12 057 describes a method for making the identification and authentication data stored on a subscription module of one mobile terminal available to another mobile terminal, thereby allowing a user to access a service from a client communications device via the subscription module of a server communications device. Hence, the client communications device itself does not need to include a subscription module.

It is an object of the present invention to provide increased security for remote access of a subscription module.

The above and other problems are solved by a method according to claim 1. The method provides to a client communications device access to a subscription module of a server communications device, the method comprising the steps of
- establishing a communications link between the client communications device and the server communications device; and
- communicating a number of messages comprising data related to the subscription module between the server communications device and the client communications device via the communications link.

The method further comprises the step of providing integrity protection of the messages communicated between the server communications device and the client communications device via the communications link.

Consequently, according to the invention an improved security is achieved by authenticating the individual messages sent between the client and server communications devices. Hence, it is ensured that the communicated messages are sent by a legitimate device and that they have not been altered during transmission over the air interface, thereby providing improved security against a dishonest user's attempt to take over a once authenticated communication channel between the devices.

In particular, it is an advantage of the invention that it provides protection of the interface between the client and server communications devices against active wiretapper attacks.

It is a further advantage of the invention that it does not require a trust relation between the subscription module and the client communications device.

Here, the term integrity protection comprises any method of assuring that information sent from an originating source is not accidentally or maliciously altered or destroyed during communication from the source to the receiver.

In a preferred embodiment of the invention, the step of providing integrity protection further comprises calculating, based on a secret session key, a respective message authentication code for each of the communicated messages; and including the calculated message authentication code into the corresponding communicated message.

Hence, by using a message authentication code (MAC), i.e. a keyed hashing algorithm that uses a symmetric session key, an increased security is achieved by providing integrity protection for each individual message. When using this type of algorithm, the sending application computes a hash function using a secret session key, and the receiving application needs to posses the same key to re-compute the hash value and, thus, to be able to verify that the transmitted data has not changed.

In a preferred embodiment of the invention, the step of establishing a communications link between the client and server communications devices comprises determining a secret session key based on a shared secret between the server and client communications devices. Hence, by refreshing the secret hashing key at each new session, reply attacks are avoided, i.e. attempts by a dishonest user to repeat a previously intercepted message.

Here, the term shared secret comprises any suitable secret data item, e.g. a secret key, a bit string, or the like, known to the server and the client communications devices that is suitable as an input for a cryptographic algorithm, such as a hash function, a MAC algorithm, a pseudo-random function, or the like.

In a further preferred embodiment of the invention, the method further comprises providing the shared secret by performing a secure pairing procedure including receiving a passcode by at least one of the client communications device and the server communications device. Hence, a user friendly security mechanism is provided which does not demand any more user interaction than is already required when, for example, pairing two Bluetooth devices.

Depending on the method employed, a user may have to enter the passcode in both devices or in one device, e.g. by displaying a PIN code on one of the devices and requesting the user to enter the PIN in the corresponding other device.

Furthermore, if the required passcode is short, i.e. less than 7 digits or letters, the time-consuming task of entering a long passcode is reduced and the possibility of entering an erroneous passcode is reduced. High security may still be achieved by utilising high-security PIN methods such as the one described in C. Gehrmann and K. Nyberg, "Enhancements to the Bluetooth baseband security", Proceedings of the NordSec Conference 2001, Nov. 1-2, 2001, DTU Denmark.

In another preferred embodiment, the communications link has a secret link key related to it and the method further comprises providing the shared secret by calculating the shared secret using the secret link key as an input.

Hence, existing pairing mechanisms for the set-up of the communications link between the server and client devices may be utilised to enhance the security of the remote access to the subscription module. For example, in connection with a Bluetooth communication, the Bluetooth link key may be utilised to derive the shared secret for integrity protection. Hence, no additional interaction is required for achieving the additional security.

In yet another preferred embodiment of the invention, the method further comprises
- incorporating a value of a first counter in each of the messages communicated from the client communications device to the server communications device, the first counter being indicative of the number of messages communicated from the client communications device to the server communications device; and
- incorporating a value of a second counter in each of the messages communicated from the server communications device to the client communications device, the second counter being indicative of the number of messages communicated from the server communications device to the client communications device;
and the step of calculating a respective message authentication code for each of the communicated messages comprises calculating a message authentication code for each of the communicated messages and the corresponding counter value.

Hence, by providing respective counters for the messages communicated to and from the server communications device, the security of the communication is further increased. For example, a dishonest user who may have intercepted a previous message including a request for sensitive information, may attempt to simply repeat this request, in order to receive the information as a reply. However, by providing a message counter, the repeated message will be identified as out of sequence by the server and can, thus, be discarded.

In the above prior art systems, once the client communications device is authenticated, it may access any function in the subscription module via the messages sent over the air interface, thereby creating a potential security risk of unauthorised access.

The method further comprises determining, for the messages communicated from the client communications device to the server communications device, whether the message is authorised to address the subscription module. Hence, a filter mechanism is provided in the server communications device which allows a selective access control and a mechanism to restrict or limit access to the subscription module, thereby increasing the security of the subscription module access.

Preferably, the method further comprises providing a shared secret between the client communications device and the server communications device; and providing an access control list stored in the server communications device in relation to at least one of the shared secret and the client communications device, thereby providing a mechanism for storing individual access control lists for different client communications devices in a safe manner. A protected database may, for example, be implemented by storing the data on a special circuit, by providing software-based protection, such as encryption, authentication, etc., or a combination thereof.

The communications link may be an electric link or a wireless communications link, such as an electro-magnetic, magnetic or inductive link. Examples of electro-magnetic links include, radio-frequency links, optical links, infrared links, microwave links, ultra sound links, or the like. For example, the communications link may be a radio link according to the Bluetooth standard, i.e. a short-range wireless technology that enables different units to communicate with relatively high speed. Bluetooth as well as other short-range wireless technologies make it possible to set up fast connections between different personal computing devices like a mobile phone, a Personal Digital Assistance (PDA), etc.

When the communications link is a wireless communications link, a fast way of establishing a communications link is provided without the need of a physical or electrical connection between the devices.

The term communications device comprises any electronic equipment including communications means adapted to establish a communications link as described above, or part of such electronic equipment. The term electronic equipment includes computers, such as stationary and portable PCs, stationary and portable radio communications equipment, etc. The term portable radio communications equipment includes mobile radio devices such as mobile telephones, pagers, communicators, e.g. electronic organisers, smart phones, PDAs, or the like.

The term subscription module comprises modules which may be removably inserted into a communications device, such as a smart card, a SIM card, a USIM card a wireless identity module (WIM) card, any other suitable integrated circuit card (ICC), or the like. The term subscription module further comprises modules which are physically inseparable from the server communications device.

The subscription module may be brought into physical contact with, e.g. inserted in, the server communications device, or a communications connection may be established, e.g. by bringing the subscription module into the range of coverage of a wireless communications interface.

The data communicated between the client and the server communications device may be data stored in the subscription module. The data may be required for registering the client communications device in a cellular network, for establishing a communications connection from the client communications device, e.g. a voice, fax, or data call, hereafter referred to as a "call", for receiving a call from the network directed to a telephone number associated with the subscription module, for authorising payments or other transactions, for accessing functionality or interfaces of the server communications device, or the like. The data may further comprise subscription authorisation data, e.g. a PIN code entered by a user of the client communications device and sent to the server communications device. The data may further comprise address data, phone books, or any other sensitive data related to the subscription module. The communication of data may comprise the transmission of data from the server communications device to the client communications device and/or the transmission of data from the client communications device to the server communications device. Hence, access to the subscription module involves access to the data related to the subscription module, i.e. the transmission of data to the subscription module, the reception of data from the subscription module, or the like.

The subscription module may be able to authenticate a number of different client communications devices.

The present invention can be implemented in different ways including the method described above and in the following, an arrangement, and further methods and product means, each yielding one or more of the benefits and advantages described in connection with the first-mentioned method, and each having one or more preferred embodiments corresponding to the preferred embodiments described in connection with the first-mentioned method and disclosed in the dependant claims.

It is noted that the features of the method described above and in the following may be implemented in software and carried out in a data processing system or other processing means caused by the execution of computer-executable instructions. The instructions may be program code means loaded in a memory, such as a RAM, from a storage medium or from another computer via a computer network. Alternatively, the described features may be implemented by hardwired circuitry instead of software or in combination with software.

The invention further relates to a communications system comprising a client communications device and a server communications device including a subscription module, the client and server communications devices each comprising respective communications means for establishing a communications link between the client communications device and the server communications device, and for communicating a number of messages comprising data related to the subscription module between the server communications device and the client communications device via the communications link;
characterised in that
the client communications device and the server communications device each comprise respective processing means adapted to provide integrity protection of the messages communicated between the server communications device and the client communications device via the communications link.

The invention further relates to a server communications device including a subscription module, the server communications device comprising communications means for establishing a communications link with a client communications device, and for communicating a number of messages comprising data related to the subscription module between the server communications device and the client communications device via the communications link;
characterised in that
the server communications device comprises processing means adapted to provide integrity protection of the messages communicated between the server communications device and the client communications device via the communications link.

The invention further relates to a client communications device for providing access to a subscription module of a server communications device, the client communications device comprising communications means for establishing a communications link with the server communications device including the subscription module, and for communicating a number of messages comprising data related to the subscription module between the client communications device and the server communications device via the communications link;
characterised in that
the client communications device comprises processing means adapted to provide integrity protection of the messages communicated between the client communications device and the server communications device via the communications link.

When the server communications device, the communications means of the server communications device, and the subscription module are physically included in a single unit, a particularly high level of security is provided, as the possibility of data interception and misuse is further reduced. Advantageously, the server communications device, a wireless interface and the subscription module may be implemented as one physically inseparable entity.

The server communications device may be used as a server device for a number of different client communications devices using the same subscription.

The term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

The term storage means includes magnetic tape, optical disc, digital video disk (DVD), compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), synchronous dynamic random access memory (SDRAM), ferromagnetic memory, optical storage, charge coupled devices, smart cards, PCMCIA cards, etc.

The term communications means comprises any circuit adapted to establish the above mentioned communications link. Examples of such circuits include RF transmitters/receivers, e.g. Bluetooth transceivers, light emitters/receivers, e.g. LEDs, infrared sensors/emitters, ultrasound transducers, etc.

The above prior art systems involve the problem that, when the subscription module is used for other authentication services in addition to GSM/UTMS, e.g. for WLAN access, etc., the security of the GSM/UTMS access may be compromised by a the other services.

As mentioned above, the method further comprises the step of determining, for at least one of the received messages, whether the message is authorised to address the subscription module.

Hence, a filter mechanism is provided in the server communications device which allows a selective access control and a mechanism to restrict or limit access to the subscription module, thereby increasing the security of the subscription module access. Even though the client communications device is authenticated, it is not necessarily authorised to access all the services provided by the subscription module, thereby increasing the security. Only those messages from the client communications device addressing functions and/or data on the subscription module which are authorised by the filter mechanism, are accepted and forwarded to the subscription module.

According to a preferred embodiment, the method further comprises providing integrity protection of the messages communicated between the server communications device and the client communications device via the communications link, where the integrity protection is based on a shared secret between the client communications device and the server communications device; and providing an access control list stored in the server communications device in relation to at least one of the shared secret and the client communications device.

Preferably, the access control list is stored in a protected database. thereby providing a mechanism for storing individual access control lists for different client communications devices in a safe manner. A protected database may, for example, be implemented by storing the data on a special circuit, by providing software-based protection, such as encryption, authentication, etc., or a combination thereof.

Accordingly, the server communications device comprises processing means for determining, for at least one of the received messages, whether the message is authorised to address the subscription module.

Preferably, the server communications device comprises storage means for storing an access control list as described above.

The invention will be explained more fully below in connection with a preferred embodiment and with reference to the drawing, in which:
fig. 1 shows a schematic view of a client communications device and a server communications device according to an embodiment of the invention;
fig. 2 shows a schematic block diagram of a communications system according to an embodiment of the invention illustrating the flow of a message from the client communications device addressing the subscription module of a server communications device;
fig. 3 shows a flow diagram of a secure communications session according to an embodiment of the invention;
fig. 4 shows a flow diagram illustrating the communication of a message from the client to the server communications device;
fig. 5 shows a flow diagram illustrating the communication of a message from the server to the client communications device;
fig. 6 shows a flow diagram of a process of generating a shared secret according to an embodiment of the invention;
fig. 7 illustrates a filter mechanism according to an embodiment of the invention; and
fig. 8 shows a schematic view of a server communications device according to an embodiment of the invention.

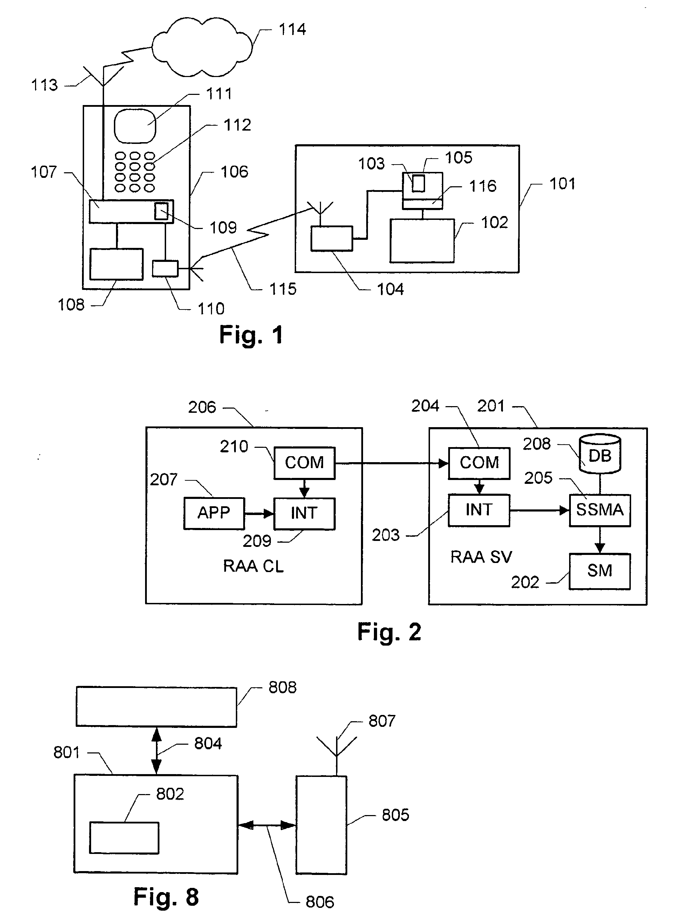

Fig. 1 shows a schematic view of a client communications device and a server communications device according to an embodiment of the invention. The client communications device 106 includes an antenna 113 for communicating via a mobile communications network 114, e.g. a GSM network. The client communications device further comprises circuitry 107 for controlling the communications device, a storage medium 108, a display 111 and a keypad 112, or other user input/output means. For example, the client communications device may be a mobile telephone or another personal communications device, such as a communicator, a PDA, a laptop, a pager, a car phone, or the like. Further examples of a client communications device include a modem, a telefax or other telecommunications equipment. The storage medium 108 may be a memory section of a SIM card comprising EPROM, ROM and/or RAM sections. Alternatively, the storage medium may be a another built-in or insertable memory, such as EEPROM, flash memory, ROM, RAM, etc.

The client communications device further comprises a Bluetooth transceiver 110. Via the Bluetooth transceiver, a local radio link 115 for data transmission can be established between the client communications device and a Bluetooth transceiver 104 of a server communications device 101 when the server communications device is brought into the connection range of the wireless local communication of the client communications device, or vice versa. The server communications device 101 comprises a processing unit 105 and a subscription module 102. In one embodiment, the subscription module is a SIM card comprising a processing unit, a memory including an EPROM section, a ROM section and a RAM section and an input/output port. Hence, the server communications device has direct access to a subscription module and is physically connected to it. The server communications device may grant the client communications device access to the services and files of the subscription module 102. For example, the server communications device may be a mobile telephone or other personal communications equipment. Alternatively, the server communications device may be a special remote access device which only serves as an access server for different client devices. For example, the server communications device may be implemented as a contactless smart card, e.g. a smart card with an integrated wireless communications interface such as a short-range radio interface.

Hence, the client communications device 106 may access the services and files of the subscription module 102 of the server communications device 101, via the radio link 115, and use the access for the connection to the cellular network 114.

In the above, two general roles have been described: A Remote Authentication Access Server (RAA Server) having direct access to the subscription module, and a Remote Authentication Access Client (RAA Client) obtaining remote access to the subscription module, thereby obtaining access to a number of possible services. Hence, in the following, the client communications device will also be referred to as the RAA Client and the server communications device will be referred to as the RAA Server. Examples of the functionality, services and data which may be accessed by the RAA Client include:
- Register the RAA Client 106 in a cellular network 114 using the subscription module 102 in the RAA Server 101.
- The RAA client 106 can access data and services available in the subscription module 102.
- The RAA Server 101 may exercise access control on what services and data can be accessed by a RAA Client 106;
- Establish a connection (i.e. a voice, fax, or data call), hereafter referred to as a "call", from the RAA Client 106 using the subscription module 102 in the RAA server 101;
- Receiving a call from the network 114 at the RAA Client 106.

On one hand, from a security point of view, it may be desirable to provide an end-to-end protection between the RAA client and the subscription module 102. However, such an end-to-end protection would require a trust relation between the subscription module and the RAA Client. In many applications such a trust relation is unfeasible. As mentioned above, the security offered for the communications link 115 by standard wireless communications protocols, such as Bluetooth, do not provide sufficient security for the security sensitive subscription module access. According to the invention, the processing units 105 and 107 provide functionality 103 and 109, respectively, for integrity protection of the messages sent over the communications link 115. Hence, it is ensured that the messages have not be altered during transmission over the air interface 115, and that the messages were sent from an authorised device. Preferred embodiments of this functionality will be described in greater detail below. Furthermore, the processing unit 105 of the RAA Server provides a filter mechanism 116 adapted to ensure that access to the subscription module is only provided to messages originating from an authorised service, as will be described in greater detail below.

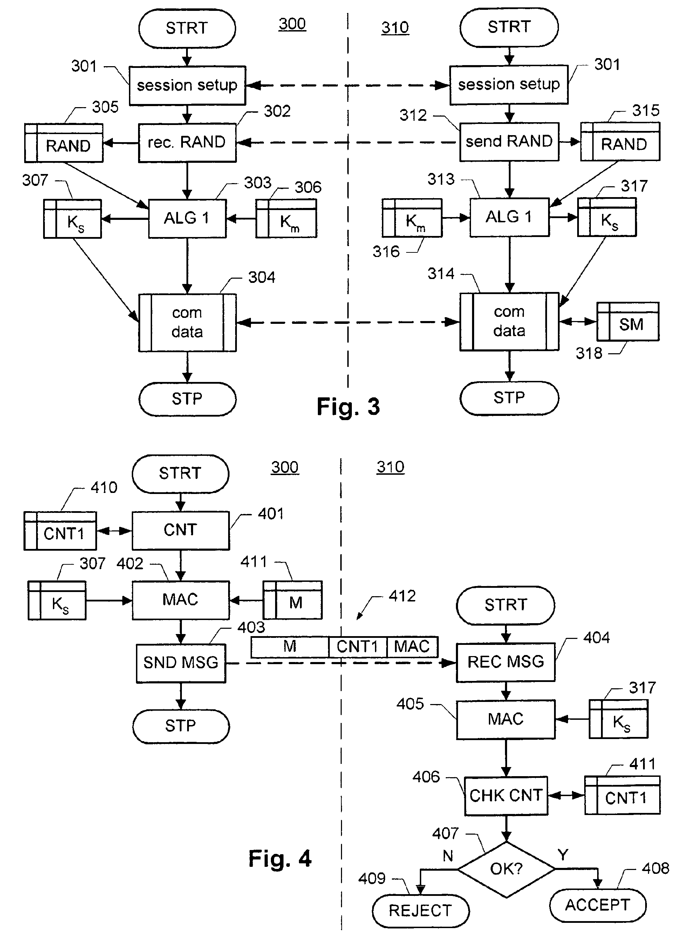

Fig. 2 shows a schematic block diagram of a communications system according to an embodiment of the invention illustrating the flow of a message from the client communications device addressing the subscription module of a server communications device. The communications system comprises a client communications device 206 and a server communications device 201 including a subscription module 202.

As mentioned above, the remote access to the subscription module by the RAA Client is particularly security sensitive. Consequently, according to the invention, each message sent from an application 207 on the RAA Client to the RAA Server is authenticated by adding a message authentication code (MAC) to each message between the RAA Client and the RAA server. Hence, the RAA Client comprises an integrity protection module 209 for calculating a MAC value and including the calculated MAC value into the message. Subsequently, the message is transmitted to the server communications device by a communications circuit 210 for transmitting messages via a wireless communications link. In one embodiment, the communications circuit is a radio transmitter, such as a Bluetooth transceiver, implementing the lower levels of a communications stack.

The RAA server 201 comprises a corresponding communications circuit 204 for receiving the transmitted message. The received message is fed into an integrity protection module 203 for authenticating the received message by calculating a MAC value and comparing it to the MAC value that was included in the message, as will be described in greater detail below. If the authentication fails, the message is rejected; otherwise the message is forwarded to a server subscription module access module 205 which implements a filter mechanism for limiting access to the subscription module 202 to authorised applications. The server subscription module access module 205 has access to a protected database 208 which comprises identification data and corresponding access control lists for use by the filter mechanism. A preferred embodiment of such a filter mechanism will be described in greater detail below. If the message is authenticated and if the filter mechanism has granted access to the subscription module, the message is forwarded to the subscription module 202 for processing.

If, for example the message comprises a request for data, a response message is returned to the application 207 via the integrity protection circuit 203 which calculates a MAC value and includes it into the responds message. The message is then communicated via communications circuits 204 and 210 to the RAA Client where the MAC value is checked by the integrity protection circuit 209 prior to forwarding the response message to the requesting application 207.

It is noted that the calculation of the MAC codes in the integrity protection modules 209 and 203 takes the message to be authenticated and a secret key as inputs. Hence, the integrity protection modules 209 and 203 have access to a shared secret stored in the RAA client 206 and the RAA server 201, respectively. Preferably, in order to prevent reply attacks, the shared secret is refreshed at each new communications session.

It is noted that the integrity protection modules 209 and 203 as well as the server subscription module access module 205 may be implemented in software by suitably programming a general- or special-purpose programmable microprocessors, Application Specific Integrated Circuits (ASIC), Programmable Logic Arrays (PLA), Field Programmable Gate Arrays (FPGA), special purpose electronic circuits, etc., or a combination thereof.

Fig. 3 shows a flow diagram of a secure communications session according to an embodiment of the invention. Fig. 3 illustrates the steps performed in the client communications device 300 and in the server communications device 310, respectively.

In an initial step 301, a communications session over a wireless communications link is initiated including authenticating the two devices using a suitable short-range wireless authentication mechanism, e.g. via the authentication mechanisms provided by the wireless communications protocol used, such as Bluetooth, IEEE 802.1X, or the like. Preferably, if present, encryption of the wireless link is switched on during session set-up.

In step 312, the server communications device 301 generates a random number, RAND, and sends this number to the client communications device 300, via the wireless link. The server communications device 301 further stores the random number in internal memory 315 for use in the subsequent steps. The client communications device receives the random number in step 302 and stores it in internal memory 305 for subsequent use.

In alternative embodiments, the random number may be generated by the client communications device, instead, or a part of the random number may be generated by the client communications device and another part may be generated by the server communications device. The two random values are then combined to produce the value actually used as input for the later calculations.

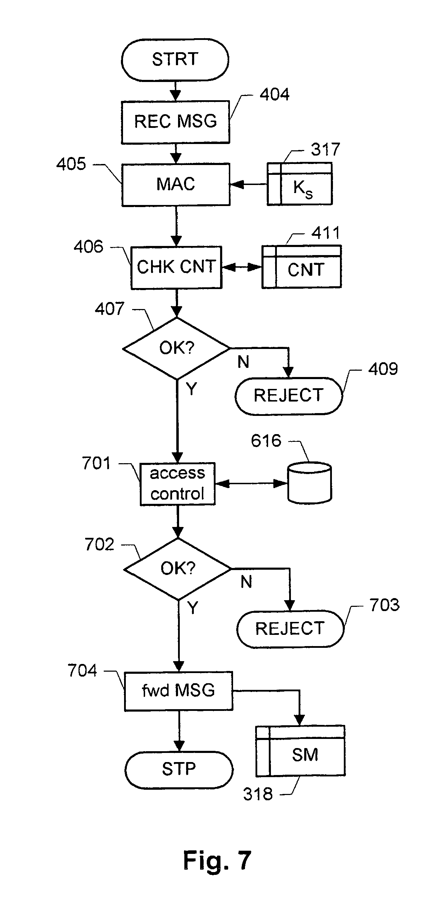

In step 303, the client communications device uses the received random number as one of the input parameters to a pseudo random function ALG1. The second input parameter is a shared secret Kₘ (306) which is known to both the client and the server communications device. Examples of methods for creating the shared secret Kₘ will be described in connection with fig. 6. The pseudo random function ALG1 generates a session key K_{S} (307) to be used for the integrity protection of the messages that are subsequently exchanged between the client and server communications devices. The algorithm ALG1 may be any suitable method for generating pseudo random numbers, preferably an algorithm which generates a random number that is unpredictable or at least not feasible to predict. An example of such an algorithm is a pseudo random function based on a one way hash function such as the HMAC algorithm described in H. Krawczyk, M. Bellare, R. Canetti, "HMAC: Keyed-Hashing for Message authentication", IETF RFC 2104 (obtainable on http://www.ietf.org/rfc/rfc2104).

Correspondingly, in step 313, the server communications device uses the generated random number RAND (315) as one of the input parameters to the pseudo random function ALG1. The second input parameter is the shared secret Kₘ (316) known to both the client and the server communications device. As for the client device, the pseudo random function ALG1 generates a session key K_{S} (317) to be used by the server communications device for the integrity protection of the messages subsequently exchanged between the client and server communications devices.

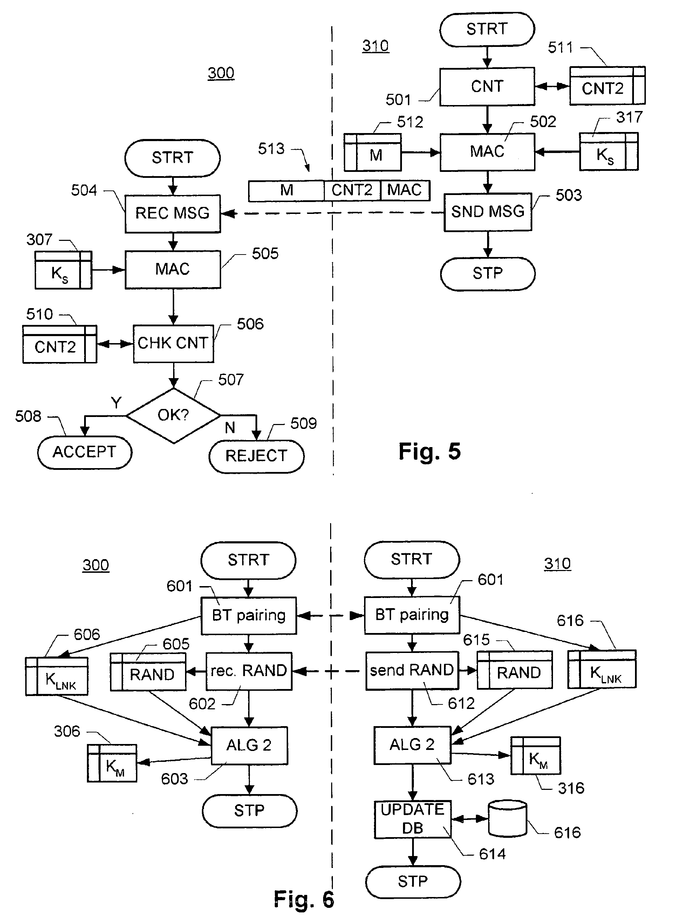

In steps 304 and 314 messages are communicated between the client communications device 300 and the service communications device 310, where each message is integrity protected based on the generated session key K_{S}. Authenticated messages directed towards the subscription module are forwarded by the server communications device to the subscription module 318, thereby providing to the client communications device 300 access to the subscription module 318. A method of integrity protecting the communicated messages will be described in greater detail in connection with figs. 4 and 5.

Fig. 4 shows a flow diagram illustrating the communication of a message from the client communications device 300 to the server communications device 310. Hence, in one embodiment, the steps of fig. 4 are performed as respective sub-processes of the steps 304 and 314 of fig. 3.

Initially, in step 401 the value of a counter 410 is included in the message, and the counter is incremented.

In step 402, in the client communications device a message authentication code (MAC) is calculated for the message 411 to be sent and the counter value. The MAC algorithm receives the message 411, the counter, and the session key K_{S} (307) as inputs. The generation of the session key K_{S} as a shared secret between the client and the server communications devices is described above. The MAC algorithm used to calculate the MAC may be any suitable MAC algorithm, preferably a cryptographically strong MAC algorithm. An example of such a MAC algorithm providing a high level of security is the HMAC algorithm (see e.g. H. Krawczyk, M. Bellare, R. Canetti, "HMAC: Keyed-Hashing for Message authentication", IETF RFC 2104, obtainable on http://www.ietf.org/rfc/rfc2104). The calculated MAC value is included in, e.g. appended or prepended to, the message.

In step 403, the resulting message 412 comprising the original message M, the calculated MAC, and the counter CNT1 is transmitted to the server communications device via the wireless link.

In step 404, the server communications device 310 receives the combined message 412 and, in step 405, a MAC value is calculated based on the received message M including the counter value CNT1, and the session key K_{S} (317). The calculated MAC value is compared to the received MAC value in order to verify the integrity of the message. If the two MAC values match, the message is accepted, otherwise it is rejected.

In step 406, it is verified whether the received counter value CNT1 has a valid value given the value of an internal counter 411 maintained by the server communications device. For example, a counter value may be accepted, if the received counter value is larger than the internal counter value and smaller than the internal value plus a predetermined increment. If the two counter values do not match the message is rejected; otherwise the message is accepted and the internal counter 411 is incremented according to the received counter value.

It is noted that, alternatively, the order of the verification steps 405 and 406 may be reversed. In the flow diagram of fig. 4, this is illustrated by only depicting an overall decision step 407, where the message is accepted (step 408) only if both the MAC value and the counter value are successfully verified. In this case the message may be forwarded to the subscription module. Otherwise the message is rejected (step 409). Preferably, access to the subscription module is subject to a further filter mechanism, as will be described below, in order to further increase the protection of the subscription module.

Fig. 5 shows a flow diagram illustrating the communication of a message from the server communications device 310 to the client communications device 301. Hence, the flow of fig. 5 corresponds to the reverse flow of fig. 4:

In step 501 the value of a counter CNT2 (511) is included in the message, and the counter CNT2 is incremented.

In step 502, in the server communications device a MAC is calculated for the message 512 to be sent and the counter value CNT2, as described above. The MAC algorithm receives the message 512, the counter value CNT2, and the session key K_{S} (317) as inputs. The calculated MAC value is included in the message.

In step 503, the resulting message 513 comprising the original message M, the calculated MAC, and the counter CNT2 is transmitted to the client communications device via the wireless link.

In step 504, the client communications device 301 receives the combined message 513 and, in step 505, the received MAC value verified against a MAC value calculated based on the received message M and the session key K_{S} (307).

In step 506, it is verified whether the received counter value CNT2 has a valid value given the value of an internal counter 510 maintained by the client communications device. If the two counter values do not match the message is rejected; otherwise the message is accepted and the internal counter 510 is incremented according to the received counter value.

Hence, as illustrated by the overall decision 507, the message is accepted (step 508) only if both the MAC value and the counter value are successfully verified. Otherwise the message is rejected (step 509).

Fig. 6 shows a flow diagram of a process of generating a shared secret according to an embodiment of the invention. According to this embodiment, the wireless communications link is a Bluetooth link.

In the initial step 601 a Bluetooth pairing is performed between the client communications device 301 and the server communications device 310 (see "Baseband Specification" in "Specification of the Bluetooth System, Core, Version 1.1 ", Bluetooth Special Interest Group, February 2001) resulting in a Bluetooth link key shared between the client and the server communications devices. The link key is derived from a PIN that should be entered by the user(s) of the devices. The link key is subsequently used to produce an encryption key that is used to protect Bluetooth communication. The generated link key is stored in internal memory 606 and 616 of the client and the server communications devices, respectively.

In step 612, the server communications device 301 generates a random number, RAND, and sends this number to the client communications device 300, via the wireless link. The server communications device 301 further stores the random number in internal memory 615 for use in the subsequent steps. The client communications device receives the random number in step 602 and stores it in internal memory 605 for subsequent use.

In step 603, the client communications device uses the received random number as one of the input parameters to a pseudo random function ALG2. The second input parameter is the above link key 606. The pseudo random function ALG2 generates a shared secret Kₘ (306) to be used for generating secret session keys according to fig. 3. The algorithm ALG2 may be any suitable method for generating pseudo random numbers, preferably an algorithm which generates a random number which is unpredictable or at least infeasible to predict. An example of such an algorithm is a pseudo random function based on a one way hash function such as the HMAC algorithm described in H. Krawczyk, M. Bellare, R. Canetti, "HMAC: Keyed-Hashing for Message authentication", IETF RFC 2104 (obtainable on http://www.ietf.org/rfc/rfc2104).

Correspondingly, in step 613, the server communications device uses the generated random number RAND (615) as one of the input parameters to the pseudo random function ALG2. The second input parameter is the link key 616. As for the client device, the pseudo random function ALG2 generates the shared secret K_{M} (316).

In step 614, the server communications device stores the information relating to the client communications device in a protected database 616. In one embodiment, the information comprises an identifier identifying the client communications device, the shared secret Kₘ, and an access control list including the services of the subscription module which the communications device should be granted access to. Hence, in step 614, the server communications device selects the set of services provided by the subscription module that the client communications device or a client application should be allowed to access. For example, the set of services may be a default set, a set of services selected by the user during, or a set selected according another criterion. By storing these information in a database, a filter mechanism may access this information and provide selective access to the subscription module. An embodiment of such a filter mechanism will be described below. Preferably, the database 616 is protected against unauthorised access, e.g. by storing it in a special protected circuit, by a software protection such as encryption or authentication, or the like.

It is noted that in alternative embodiments using a communications protocol other than Bluetooth, a corresponding process may be performed using a shared secret established during an initial pairing procedure between the server and client communications devices.

Hence, in the above a method is described for deriving a shared secret from a Bluetooth link key or a corresponding key in another protocol.

Alternatively, the shared secret may be obtained in a different way. For example, the shared secret Kₘ may be derived from a secure pairing protocol. The pairing may be performed using a secure key exchange mechanism based on public key certificates, on a user PIN input, or the like. If a PIN based method is used, the user is requested to enter a password into at least one of the devices. An example of highly secure PIN based methods are described in C. Gehrmann and K. Nyberg: "Enhancements to the Bluetooth Baseband security", in Proceedings of the NordSec Conference 2001, 1-2 Nov. 2001, DTU, Denmark.

Hence, in the above user-friendly and, at the same time, secure ways of obtaining a shared secret between the RAA Client and the RAA Server have been described.

Fig. 7 illustrates a filter mechanism according to an embodiment of the invention. Fig. 7 illustrates the steps performed by the server communications device upon receipt of a message from the client communications device. The steps 404-406 of receiving the message, verifying a MAC value, and checking a counter, respectively, have been described in connection with fig. 4. If the received message is accepted (step 407), and if the message attempts to access a service provided by the subscription module, the message is passed to a server subscription module application which implements a filter mechanism. In step 701, the server subscription module application sends a query to the access control database 616 described in connection with fig. 6. The query comprises the ID of the requesting RAA client. In one embodiment, the query further includes an identification of the requesting client application, thereby providing a more fine-grained access control, as some applications on a given device may obtain other access rights than other applications on the same device. The database returns the corresponding list of accepted services for that particular RAA client to the server subscription module application. In step 702, the server subscription module application checks whether the requested service should be granted to the requesting client. If so, the RAA client request is forwarded to the subscription module 318 (step 704); otherwise the request is rejected.

Hence, the above filter mechanism protects the subscription module against unauthorised access by restricting access to the subscription module. Only selected clients have access to selected services. In particular, access to security sensitive functions may be limited while providing a wider access to other functions. This is a particular advantage, if a SIM card is used for other authentication services as GSM/UMTS. In such a scenario, the above method prevents the security of the GSM/UMTS access to be compromised by other services.

Fig. 8 shows a schematic view of a modular server communications device according to an embodiment of the invention. The server communications device comprises a base module 801 with a subscription module 802. The base module 801 provides interfaces 804 and 806 to a user interface module 808 and a radio interface module 805. The user interface may provide a display for providing a graphical user interface and/or a keypad, a pointing device, or the like. The radio interface unit may comprise a radio transmitter/receiver and an aerial for connecting to a cellular network, a short-range radio transceiver and/or other wireless interfaces. The interfaces 804 and 806 may be implemented as plug-in interfaces, e.g. using a standard such as USB or the like. Alternative, the interfaces may be contact-free interfaces e.g. based on electromagnetic radiation, such as infrared or a radio link, e.g. using the Bluetooth technology or other short-range wireless communications technologies. The data communication via the interface 804 and/or the interface 806 may use a proprietary or a standard protocol. For example the base module may be implemented as a smart card, e.g. a smart card having an integrated radio interface. In another embodiment, the base module may be implemented as a unit providing the interfaces 804 and 806 and including a subscription module, e.g. as a removably insertable unit, such as a smart card.

It should be noted that the above-mentioned embodiments illustrate rather than limit the invention, and that those skilled in the art will be able to design many alternative embodiments without departing from the scope of the appended claims.

For example, even though the invention has primarily been described in connection with a Bluetooth wireless communications link, the scope of the invention is not restricted to Bluetooth communications. It is understood that the invention may also be applied in connection with other communications links between the client and server communications devices. For example the invention may be applied to other wireless communications links, such as an electro-magnetic, magnetic or inductive link. Examples of electro-magnetic links include, radio-frequency links, optical links, infrared links, microwave links, ultra sound links, or the like.

## Claims

1. A method of providing to a client communications device by a server communications device access to a service, the server communications device comprising a subscription module for facilitating authentication of a subscriber to receive the service, the method comprising the steps of
- establishing (301) a communications link between the client communications device (300) and the server communications device (310); and
- receiving (314;404) a number of messages (M) by the server communications device from the client communications device via the communications link, the messages being addressed to the subscription module;
**characterised in that**
the method further comprises the server communications device performing the following steps:
- providing (405) integrity protection of each of the number of received messages to determine whether the received message is authentic;
- determining (701,702) whether the received message is authorised to address the subscription module; and
- forwarding (704) the received message to the subscription module, if the server communications device has determined the received message as being authentic and if the server communications device has determined the received message as being authorised to address the subscription module; otherwise rejecting (703) the received message.

2. A method according to claim 1, **characterised in that** the step of providing integrity protection further comprises calculating, based on a secret session key, a respective message authentication code for each received message; and comparing the the calculated message authentication code with a corresponding code included in the received message.

3. A method according to claim 2, **characterised in that** the step of establishing a communications link between the client and server communications devices comprises determining a secret session key based on a shared secret between the server and client communications devices.

4. A method according to claim 3, **characterised in that** the method further comprises providing the shared secret by performing a secure pairing procedure including receiving a passcode by at least one of the client communications device and the server communications device.

5. A method according to claim 4, **characterised in that** the passcode is at the most 48 bits long.

6. A method according to claim 3, **characterised in that** the communications link has a secret link key related to it and the method further comprises providing the shared secret by calculating the shared secret using the secret link key as an input.

7. A method according to any one of claims 2 through 6, **characterised in that** the received message includes a first counter value generated by the client communications device, the first counter value being indicative of the number of messages communicated from the client communications device to the server communications device;
that the step of calculating a message authentication code comprises calculating the message authentication code for the received message and the first counter value; and
that the method further comprises comparing the first counter value with a value of a corresponding internal counter maintained by the server communications device.

8. A method according to any one of claims 1 through 7, **characterised in that** the method further comprises providing a shared secret between the client communications device and the server communications device; and providing an access control list stored in the server communications device in relation to at least one of the shared secret and the client communications device.

9. A communications system comprising a client communications device (106,206,300) and a server communications device (101,201,310) adapted to provide to the client communications device access to a service, the server communications device including a subscription module (102;202,31.8) for facilitating authentication of a subscriber to receive the service, the client and server communications devices each comprising respective communications means (110,104;204,210) for establishing a communications link (115) between the client communications device and the server communications device, and for communicating a number of messages from the client communications device to the server communications device, the messages being addressed to the subscription module;
**characterised in that**
the client communications device and the server communications device each comprise respective processing means (105,107) adapted to provide integrity protection of each of the number of messages communicated from the client communications device to the server communications device via the communications link to determine whether a message received by the server communications device is authentic; and the processing means of the server communications device is further adapted to
- determine whether the received message is authorised to address the subscription module; and to
- forward the received message to the subscription module, if the server communications device has determined the received message as being authentic and if the server communications device has determined the received message as being authorised to address the subscription module; otherwise rejecting the received message.

10. A server communications device (101,201,310) for providing to a client communications device (106,206,300) access to a service, the server communications device including a subscription module (102,202,318) for facilitating authentication of a subscriber to receive the service, the server communications device comprising communications means (104,204) for establishing a communications link (115) with a client communications device, and for receiving a number of messages from the client communications device via the communications link, the messages being addressed to the subscription module;
**characterised in that**
the server communications device comprises processing means (105) adapted
- to provide integrity protection of each of the number of messages received from the client communications device via the communications link to determine whether each of the number of messages received by the server communications device is authentic;
- to determine whether the received message is authorised to address the subscription module; and
- to forward the received message to the subscription module, if the server communications device has determined the received message as being authentic and if the server communications device has determined the received message as being authorised to address the subscription module; otherwise rejecting the received message.

## Patentansprüche

1. Verfahren zum Bereitstellen eines Zugriffs auf einen Dienst durch eine Server-Kommunikationsvorrichtung an eine Client-Kommunikationsvorrichtung, wobei die Server-Kommunikationsvorrichtung ein Subskriptionsmodul zum Erleichtern einer Authentifizierung eines Teilnehmers zum Empfangen des Dienstes umfasst, wobei das Verfahren die Schritte umfasst zum:
- Errichten (301) einer Kommunikationsverbindung zwischen der Client-Kommunikationsvorrichtung (300) und der Server-Kommunikationsvorrichtung (310); und
- Empfangen (314; 404) einer Anzahl von Nachrichten (M) durch die Server-Kommunikationsvorrichtung von der Client-Kommunikationsvorrichtung über die Kommunikationsverbindung, wobei die Nachrichten an das Subskriptionsmodul adressiert werden;
**dadurch gekennzeichnet, dass**
das Verfahren ferner umfasst, dass die Server-Kommunikationsvorrichtung die folgenden Schritte durchführt:
- Bereitstellen (405) eines Integritätsschutzes jeder der Anzahl empfangener Nachrichten, um zu bestimmen, ob die empfangene Nachricht authentisch ist;
- Bestimmen (701, 702), ob die empfangene Nachricht zum Adressieren des Subskriptionsmoduls autorisiert ist; und
- Weiterleiten (704) der empfangenen Nachricht an das Subskriptionsmodul, wenn die Server-Kommunikationsvorrichtung die empfangene Nachricht als authentisch bestimmt hat und wenn die Server-Kommunikationsvorrichtung die empfangene Nachricht als zum Adressieren des Subskriptionsmoduls autorisiert bestimmt hat; andernfalls Ablehnen (703) der empfangenen Nachricht.

2. Verfahren gemäß Anspruch 1, **dadurch gekennzeichnet, dass** der Schritt zum Bereitstellen eines Integritätsschutzes ferner ein Berechnen, auf der Grundlage eines geheimen Sitzungsschlüssels, eines jeweiligen Nachrichtenauthentifizierungscodes für jede empfangene Nachricht; und ein Vergleichen des berechneten Nachrichtenauthentifizierungscodes mit einem in der empfangenen Nachricht enthaltenen entsprechenden Code umfasst.

3. Verfahren gemäß Anspruch 2, **dadurch gekennzeichnet, dass** der Schritt zum Errichten einer Kommunikationsverbindung zwischen der Client-Kommunikationsvorrichtung und der Server-Kommunikationsvorrichtung ein Bestimmen eines geheimen Sitzungsschlüssels auf der Grundlage eines gemeinsamen Geheimnisses zwischen der Server-Kommunikationsvorrichtung und der Client-Kommunikationsvorrichtung umfasst.

4. Verfahren gemäß Anspruch 3, **dadurch gekennzeichnet, dass** das Verfahren ferner ein Bereitstellen des gemeinsamen Geheimnisses durch Durchführen einer sicheren Paarungsprozedur mit einem Empfangen eines Passiercodes durch wenigstens die Client-Kommunikationsvorrichtung oder die Server-Kommunikationsvorrichtung umfasst.

5. Verfahren gemäß Anspruch 4, **dadurch gekennzeichnet, dass** der Passiercode höchstens 48 Bits lang ist.

6. Verfahren gemäß Anspruch 3, **dadurch gekennzeichnet, dass** die Kommunikationsverbindung einen geheimen Verbindungsschlüssel mit Bezug zu sich hat, und dass das Verfahren ferner ein Bereitstellen des gemeinsamen Geheimnisses durch Berechnen des gemeinsamen Geheimnisses mit Verwendung des geheimen Verbindungsschlüssels als eine Eingabe umfasst.

7. Verfahren gemäß einem der Ansprüche 2 bis 6, **dadurch gekennzeichnet, dass** die empfangene Nachricht einen durch die Client-Kommunikationsvorrichtung erzeugten ersten Zählerwert enthält, wobei der erste Zählerwert die Anzahl der von der Client-Kommunikationsvorrichtung an die Server-Kommunikationsvorrichtung kommunizierten Nachrichten angibt;
dass der Schritt zum Berechnen eines Nachrichtenauthentifizierungscodes ein Berechnen des Nachrichtenauthentifizierungscodes für die empfangene Nachricht und den ersten Zählerwert umfasst; und
dass das Verfahren ferner ein Vergleichen des ersten Zählerwertes mit einem Wert eines durch die Server-Kommunikationsvorrichtung aufrecht erhaltenen entsprechenden internen Zählers umfasst.

8. Verfahren gemäß einem der Ansprüche 1 bis 7, **dadurch gekennzeichnet, dass** das Verfahren ferner ein Bereitstellen eines gemeinsamen Geheimnisses zwischen der Client-Kommunikationsvorrichtung und der Server-Kommunikationsvorrichtung; und ein Bereitstellen einer Zugriffssteuerliste umfasst, die in der Server-Kommunikationsvorrichtung gespeichert ist, mit Bezug zu wenigstens dem gemeinsamen Geheimnis oder der Client-Kommunikationsvorrichtung.

9. Kommunikationssystem mit einer Client-Kommunikationsvorrichtung (106, 206, 300) und einer Server-Kommunikationsvorrichtung (101, 201, 310), die ausgebildet ist, der Client-Kommunikationsvorrichtung Zugriff auf einen Dienst bereitzustellen, wobei die Server-Kommunikationsvorrichtung ein Subskriptionsmodul (102; 202, 318) zum Erleichtern einer Authentifizierung eines Teilnehmers zum Empfangen des Dienstes enthält, wobei die Client-Kommunikationsvorrichtung und die Server-Kommunikationsvorrichtung jeweils jeweilige Kommunikationseinrichtungen (110, 104; 204, 210) zum Errichten einer Kommunikationsverbindung (115) zwischen der Client-Kommunikationsvorrichtung und der Server-Kommunikationsvorrichtung und zum Kommunizieren einer Anzahl von Nachrichten von der Client-Kommunikationsvorrichtung an die Server-Kommunikationsvorrichtung umfassen, wobei die Nachrichten an das Subskriptionsmodul adressiert sind;
**dadurch gekennzeichnet, dass**
die Client-Kommunikationsvorrichtung und die Server-Kommunikationsvorrichtung jeweils eine jeweilige Verarbeitungseinrichtung (105, 107) umfassen, die zum Bereitstellen eines Integritätsschutzes jeder der Anzahl von von der Client-Kommunikationsvorrichtung an die Server-Kommunikationsvorrichtung über die Kommunikationsverbindung kommunizierten Nachrichten ausgebildet ist, um zu bestimmen, ob eine durch die Server-Kommunikationsvorrichtung empfangene Nachricht authentisch ist; und wobei die Verarbeitungseinrichtung der Server-Kommunikationsvorrichtung ferner ausgebildet ist zum
- Bestimmen, ob die empfangene Nachricht zum Adressieren des Subskriptionsmoduls autorisiert ist; und
- Weiterleiten der empfangenen Nachricht an das Subskriptionsmodul, wenn die Server-Kommunikationsvorrichtung die empfangene Nachricht als authentisch bestimmt hat und wenn die Server-Kommunikationsvorrichtung die empfangene Nachricht als zum Adressieren des Subskriptionsmoduls autorisiert bestimmt hat; andernfalls Ablehnen der empfangenen Nachricht.

10. Server-Kommunikationsvorrichtung (101, 201, 310) zum Bereitstellen, an eine Client-Kommunikationsvorrichtung (106, 206, 300), eines Zugriffs auf einen Dienst, wobei die Server-Kommunikationsvorrichtung ein Subskriptionsmodul (102, 202, 318) zum Erleichtern einer Authentifizierung eines Teilnehmers zum Empfangen des Dienstes enthält, wobei die Server-Kommunikationsvorrichtung eine Kommunikationseinrichtung (104, 204) zum Errichten einer Kommunikationsverbindung (115) mit einer Client-Kommunikationsvorrichtung und zum Empfangen einer Anzahl von Nachrichten von der Client-Kommunikationsvorrichtung über die Kommunikationsverbindung umfasst, wobei die Nachrichten an das Subskriptionsmodul adressiert sind;
**dadurch gekennzeichnet, dass**
die Server-Kommunikationsvorrichtung eine Verarbeitungseinrichtung (105) umfasst, die ausgebildet ist zum
- Bereitstellen eines Integritätsschutzes jeder der Anzahl von von der Client-Kommunikationsvorrichtung über die Kommunikationsverbindung empfangenen Nachrichten, um zu bestimmen, ob jede der Anzahl von durch die Server-Kommunikationsvorrichtung empfangenen Nachrichten authentisch ist;
- Bestimmen, ob die empfangene Nachricht zum Adressieren des Subskriptionsmoduls autorisiert ist; und
- Weiterleiten der empfangenen Nachricht an das Subskriptionsmodul, wenn die Server-Kommunikationsvorrichtung die empfangene Nachricht als authentisch bestimmt hat und wenn die Server-Kommunikationsvorrichtung die empfangene Nachricht als zum Adressieren des Subskriptionsmoduls autorisiert bestimmt hat; andernfalls Ablehnen der empfangenen Nachricht.

## Revendications

1. Procédé de fourniture à un dispositif de communication client, par un dispositif de communication serveur, d'un accès à un service, le dispositif de communication serveur comprenant un module d'abonnement destiné à faciliter l'authentification d'un abonné afin de recevoir le service, le procédé comprenant les étapes consistant à :
- établir (301) une liaison de communication entre le dispositif de communication client (300) et le dispositif de communication serveur (310) ; et
- recevoir (314 ; 404) par le dispositif de communication serveur plusieurs messages (M) provenant du dispositif de communication client via la liaison de communication, les messages étant adressés au module d'abonnement ;
**caractérisé en ce que** le procédé comprend en outre l'exécution par le dispositif de communication serveur des étapes consistant à :
- fournir (405) une protection de l'intégrité de chacun des plusieurs messages reçus afin de déterminer si le message reçu est authentique ;
- déterminer (701, 702) si le message reçu est autorisé à être adressé au module d'abonnement ; et
- acheminer (704) le message reçu vers le module d'abonnement si le dispositif de communication serveur a déterminé que le message reçu est authentique et si le dispositif de communication serveur a déterminé que le message reçu est autorisé à être adressé au module d'abonnement ; sinon, rejeter (703) le message reçu.

2. Procédé selon la revendication 1, **caractérisé en ce que** l'étape de fourniture d'une protection de l'intégrité comprend en outre le calcul, pour chaque message reçu, sur la base d'une clef secrète de session, d'un code d'authentification de message respectif et la comparaison du code d'authentification de message calculé avec un code correspondant inclus dans le message reçu.

3. Procédé selon la revendication 2, **caractérisé en ce que** l'étape d'établissement d'une liaison de communication entre les dispositifs de communication client et serveur comprend la détermination d'une clef secrète de session fondée sur un secret partagé entre les dispositifs de communication client et serveur.

4. Procédé selon la revendication 3, **caractérisé en ce que** le procédé comprend en outre la fourniture du secret partagé en exécutant une procédure d'appariement sécurisée comprenant la réception d'un code de passe par au moins l'un des dispositifs de communication client et serveur.

5. Procédé selon la revendication 4, **caractérisé en ce que** le code de passe fait au plus 48 bits de longueur.

6. Procédé selon la revendication 3, **caractérisé en ce que** la liaison de communication possède une clef de liaison secrète qui lui est associée, et **en ce que** le procédé comprend en outre la fourniture du secret partagé sous la forme d'un calcul du secret partagé en utilisant comme entrée la clef de liaison secrète.

7. Procédé selon l'une quelconque des revendications 2 à 6, **caractérisé en ce que** le message reçu comprend une première valeur de compteur produite par le dispositif de communication client, la première valeur de compteur étant indicative du nombre de messages échangés entre le dispositif de communication client et le dispositif de communication serveur ;
**en ce que** l'étape de calcul d'un code d'authentification de message comprend le calcul du code d'authentification de message pour le message reçu et pour la première valeur de compteur ; et
**en ce que** le procédé comprend en outre la comparaison de la première valeur de compteur avec une valeur d'un compteur interne correspondant qui est maintenu par le dispositif de communication serveur.

8. Procédé selon l'une quelconque des revendications 1 à 7, **caractérisé en ce que** le procédé comprend en outre la fourniture d'un secret partagé entre le dispositif de communication client et le dispositif de communication serveur, et la fourniture d'une liste de contrôle des accès stockée sur le dispositif de communication serveur et liée soit au secret partagé, soit au dispositif de communication client.

9. Système de communications comprenant un dispositif de communication client (106, 206, 300) et un dispositif de communication serveur (101, 201, 310) conçu pour fournir au dispositif de communication client un accès à un service, le dispositif de communication serveur comprenant un module d'abonnement (102 ; 202, 318) destiné à faciliter l'authentification d'un abonné afin de recevoir le service, les dispositifs de communication client et serveur comprenant chacun des moyens de communication respectifs (110, 104 ; 204, 210) pour établir une liaison de communication (115) entre le dispositif de communication client et le dispositif de communication serveur, et pour communiquer plusieurs messages entre le dispositif de communication client et le dispositif de communication serveur, les messages étant adressés au module d'abonnement ;
**caractérisé en ce que**
le dispositif de communication client et le dispositif de communication serveur comprennent chacun des moyens de traitement respectifs (105, 107) conçus pour fournir une protection de l'intégrité de chacun des plusieurs messages communiqués entre le dispositif de communication client et le dispositif de communication serveur, afin de déterminer si un message reçu par le dispositif de communication serveur est authentique, le moyen de traitement du dispositif de communication serveur étant en outre conçu pour
- déterminer si le message reçu est autorisé à être adressé au module d'abonnement ; et
- acheminer le message reçu vers le module d'abonnement si le dispositif de communication serveur a déterminé que le message reçu est authentique et si le dispositif de communication serveur a déterminé que le message reçu est autorisé à être adressé au module d'abonnement ; sinon, rejeter (703) le message reçu.

10. Dispositif de communication serveur (101, 201, 310) destiné à fournir à un dispositif de communication client (106, 206, 300) un accès à un service, le dispositif de communication serveur comprenant un module d'abonnement (102, 202, 318) destiné à faciliter l'authentification d'un abonné afin de recevoir le service, le dispositif de communication serveur comprenant un moyen de communication (104, 204) pour établir une liaison de communication (115) avec un dispositif de communication client et pour recevoir plusieurs messages du dispositif de communication client via la liaison de communication, les messages étant adressés au module d'abonnement ;
**caractérisé en ce que**
le dispositif de communication serveur comprend un moyen de traitement (105) conçu pour
- fournir une protection de l'intégrité de chacun des plusieurs messages reçus du dispositif de communication client via la liaison de communication, afin de déterminer si chacun des plusieurs messages reçus par le dispositif de communication serveur est authentique ;
- déterminer si le message reçu est autorisé à être adressé au module d'abonnement ; et
- acheminer le message reçu vers le module d'abonnement si le dispositif de communication serveur a déterminé que le message reçu est authentique et si le dispositif de communication serveur a déterminé que le message reçu est autorisé à être adressé au module d'abonnement ; sinon, rejeter le message reçu.
